# EUROPEAN PATENT APPLICATION

(11) **EP 1 776 869 A1**
(43) Date of publication of application: **25.04.2007**
(21) Application number: 06021904.5
(22) Date of filing: 19.10.2006
(51) Int. Cl.: A23D 9/00, C11C 5/00

(54) **Compressed candle**

(30) Priority: 19.10.2005 US 728155 P
(71) Applicant: Blyth, Inc., Greenwich Connecticut 06831-5118 (US)
(72) Inventor: Burkhamer, Ronald, E., State Road, North Carolina 28676 (US); Gutkowski, Steven, M., Elkin, North Carolina 28621 (US)
(74) Representative: Jostarndt, Hans-Dieter

(57) **Abstract**

A candle including a mixture of fuels including at least 10 wt% tallow and 1 wt% to 30 wt% of a high oil content paraffin is disclosed. The candle optionally and preferably includes a microcrystalline wax and an oil-binding additive such as siearic acid. The candle has good thermal stability and good bum characteristics.

## Description

### CROSS-REFERENCE TO RELATED APPLICATION

The benefit under 35 U.S.C. §119(e) of U.S. Provisional Patent Application Serial No. 60/728,155 filed October 19, 2005, is hereby claimed.

### BACKGROUND

### Field of the Disclosure

The disclosure relates generally to decorative and functional wax articles. More particularly, the disclosure relates to a free-standing, compressed candle containing tallow and a high oil content, partially-refined petroleum product such as slack wax or scale wax.

### Brief Description of Related Technology

Candles are known which are made from compressed wax particles. In general the process includes creating wax particles (e.g., granules, pastilles, pellets, powders, prills, beads, flakes, or chunks), adding the particles into a compression mold, compressing the wax to form a wax body, and adding a wick. The candle is free-standing and does not require a container. The candle is substantially homogenous, although some types include a thin overcoat of a wax of the same or different type. Types of such candles include pillar candles and taper candles.

The formulation of such candles must meet various requirements in order to produce a practical, useful, commercially-acceptable candle. The formulation must yield a candle body which is hard enough and heat-resistant enough that it can be shipped via typical commercial methods and used in a variety of environments wherein a range of temperature conditions are encountered. For example, the candle cannot exude (a.k.a. "sweat") oil at high temperatures, it must retain its shape when exposed to high temperatures during shipping, and it preferably does not transfer oils to surfaces on contact. At the same time, when the candle is burned it must form a sufficient burn pool of molten wax such that the entire candle diameter is consumed - i.e., the outer regions of the candle soften and fold into the burn pool to result in nearly complete consumption of the candle. Furthermore, the granulation and compression processes impose further restrictions on the formulation of a compressed candle.

Up until the 1800s, unrefined tallow was used for candle manufacture. Manufactured paraffin was introduced in the 1800s, providing an alternative to tallow. Compressed candles are typically made from fully-refined paraffin having a low oil content as the main constituent.

### SUMMARY

One aspect of the disclosure provides a candle including a mixture of fuels including at least 10 wt% tallow and 1 wt% to 30 wt% of a partially-refined petroleum wax. The candle optionally and preferably includes a microcrystalline wax and an oil-binding additive such as stearic acid.

Further aspects and advantages will be apparent to those of ordinary skill in the art from a review of the following detailed description, taken in conjunction with the drawings. While the candle is susceptible of embodiments in various forms, the description hereafter includes specific embodiments with the understanding that the disclosure is illustrative, and is not intended to limit the invention to the specific embodiments described herein.

### BRIEF DESCRIPTION OF THE DRAWINGS

For further facilitating the understanding of the present invention, two drawing figures are appended hereto.

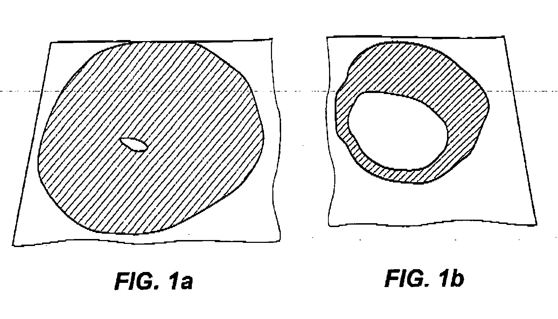

Figure 1 shows the results of burn testing of a comparative compressed candle having only tallow and stearic acid (Figure la) and a compressed candle according to the disclosure herein (Figure 1b).

Figure 2 shows the results of contact bleed testing of a comparative compressed candle having a high concentration of fully-refined paraffin (Figure 2a) and a compressed candle according to the disclosure herein (Figure 2b).

### DETAILED DESCRIPTION

The candle is free-standing, as opposed to being a container-type candle such as a filled jar. The combustible content of the candle is substantially homogenous, although a relatively thin overcoat of a waxy material may be applied, such as by dipping or spraying. Although a relatively thin overcoat of waxy material can be part of the candle, the base compressed candle itself is still a free-standing candle. Accordingly, the type of waxy overcoat that would convert a typical container candle formulation into a free-standing candle is excluded from the type of candle contemplated herein, as are such free-standing candles which would not be free standing but for the presence of such an overcoat.

The primary combustible content of the candle body includes a mixture of a tallow fuel and a partially-refined petroleum wax. Preferably, the candle also includes a microcrystalline wax. Various other optional additives are also described below.

The tallow is a solid wax derived by rendering animal fat, and it consists chiefly of triglycerides of palmitic, stearic, and oleic acids. Beef tallow is preferred. Whereas unrefined beef tallow has a high content of unsaturated components (iodine value (IV) of about 40-50), a preferred tallow for use in the candle described herein will be partially hydrogenated. The partially-hydrogenated tallow will have an iodine value of about 30 or less, preferably about 25 or less, about 22 or less, or about 20 or less. The partially-hydrogenated tallow will have an iodine value of about 10 or greater, preferably about 15 or greater, for example about 18 or greater. The following specific ranges and values are also contemplated: about 10 to about 30, about 15 to about 25, and about 18 to about 22, and 20. The partially- hydrogenated tallow preferably is characterized by a titre in a range of 55 °C to 59 °C. The partially- hydrogenated tallow preferably has a melting point (Wiley) of about 55 °C.

A fully-refined tallow can also be used, preferably together with a partially-hydrogenated tallow. The amount of fully-refined tallow is preferably up to about 30 wt%, for example up to about 20 wt%. A preferred fully-hydrogenated beef tallow has a maximum iodine value of 1. A preferred fully-hydrogenated beef tallow has a melting point (Wiley) of about 60 °C. A preferred fully-hydrogenated beef tallow is characterized by a titre of about 57 °C to about 61 °C.

The candle will include at least about 10% by weight of animal tallow, based on the weight of the candle (wt%), and preferably partially-hydrogenated tallow. In refinements, the candle can include at least about 20 wt% animal tallow, at least about 25 wt% animal tallow, greater than 25 wt% animal tallow, at least about 30 wi% animal tallow, at least about 40 wt% animal tallow, and at least about 50 wt% animal tallow. Generally the animal tallow will be present in an amount of about 90 wt% or 80 wt% or less, and is also contemplated to be present at levels of about 50 wt% or less, and about 45 wt% or less. For example, in one type of embodiment, the animal tallow will be present in an amount greater than 25 wt% and about 50 wt% or less. In another type of embodiment, the animal tallow will be present in a range from about 30 wt% to about 45 wt%. In another type of embodiment, the candle will include animal tallow in a range of about 20 wt% to about 30 wt%, or greater than 20 wt% to about 30 wt%. In one type of an embodiment using primarily or solely fully-refined tallow, the tallow will be present in an amount of 40 wt% or less, or 30 wt% or less. In one type of embodiment using primarily or solely partially-hydrogenated tallow, the tallow will be present in an amount up to 80 wt% or up to 90 wt%. Blends of fully- and partially-hydrogenated tallow are contemplated for use.

As the tallow iodine value decreases, the tallow becomes harder and it can absorb more oil, allowing for the use of a greater concentration of high oil content paraffins such as slack wax. As the tallow iodine value increases, the tallow becomes softer, until eventually it will no longer function as a free-standing candle.

In the candles described herein, as less tallow is used, e.g., less than 20 wt%, the candles tend to have poorer thermal stability, lower structural integrity, and higher soot generation. Also, as the tallow has a high iodine value the candles begin to have poorer thermal stability, lower structural integrity, and higher soot generation. These drawbacks are particularly severe in combination (i.e., less tallow and higher iodine value). Candles having higher amounts of tallow, e.g., greater than 80 wt%, tend to become too difficult to burn to a desirable consumption. Also, as the tallow has a low iodine value, e.g., less than 1, the candles tend to become too difficult to burn to an desirable consumption. These drawbacks are particularly severe in combination (i.e., high tallow content and lower iodine value).

Furthermore, a candle according to the description herein allows for the production of compressed candles within the ranges of operating conditions achievable in existing compression equipment. The resulting candles are nicely compacted and thermally stable. The candles can also be designed to have one or more favorable burning characteristics including a high degree of consumption and a long burn time, compared to candles outside the present disclosure. Preferably, at least 80% of the candle is consumed in a complete bum.

Use of tallow can provide the candle with a creamy appearance. Use of tallow can also allow the addition of higher amounts of fragrance oils to the candle, as compared to a petroleum-based candle. For example, the fragrance can be present in an amount greater than 10 wt%, or greater than 20 wt%. Suitable ranges include 12 wt% to 30 wt%, 20 wt% to 30 wt% and 25 wt% to 30 wt%. The foregoing ranges of fragrance oils are contemplated for use together with partially-refined petroleum waxes.

The partially-hydrogenated tallow binds oils and allows the use of cheaper, partially-refined petroleum waxes, such as slack wax and scale wax. The candle will also include 1 to about 30 wt% of a partially-refined petroleum wax, which has a high content of oils characteristic of the petroleum fraction. The partially-refined petroleum wax will have at least 0.5 wt% oil, and is contemplated to include greater than 0.5 wt% oil, at least 1 wt% oil, at least 2 wt% oil, or at least 3 wt% oil. The partially-refined petroleum wax is also contemplated to include up to 40 wt% oil, or up to 15 wt% oil.

Preferably, the candle will include at least about 20 wt% partially-refined petroleum wax. The amount of the partially-refined petroleum wax is preferably about 80 wt% or less. The partially-refined petroleum wax preferably has a molecular weight in a range of about 250 Daltons (Da) to about 850 Da. The partially-refined petroleum wax is preferably slack wax, scale wax, semi-refined paraffin, or a mixture thereof in any desired ratio.

Candles with a high content (e.g., 90% or more) of a partially-refined petroleum wax such as slack wax tend to result in poor quality candles. At higher temperatures, which can often be encountered during shipping, such candles tend to "sweat out" liquid components, or lower-melting components can elude from the higher-melting solid components of the candle. This type of separation can result in a liquid oil layer on the surface of the candle. Addition of a partially-hydrogenated tallow produces a candle more resilient to temperature extremes.

In one embodiment the partially-refined petroleum wax is a slack wax. Slack wax is a generic term for the mixture of wax and oil recovered in a petroleum dewaxing process. In one embodiment, the slack wax will have a free oil content of at least 2 wt%. In another embodiment, the free oil content will be at least 3 wt% or at least 5 wt%. The free oil content of the slack wax is preferably about 35 wt% or less, and in one type of embodiment will be 20 wt% or less. Suitable ranges of free oil include 2 wt% to 20 wt%, 10 wt% to 20 wt%, and 3 wt% to 20 wt%. The slack wax preferably has a melt point in a range of about 43 °C to about 66 °C, for example from 50 °C to about 53 °C. Slack wax generally can have a color in a range from white to brown, and is relatively soft. A suitable low-range melting point slack wax is available from ExxonMobil under the trade name PROWAX 310 petroleum slack wax.

In another embodiment, the partially-refined petroleum wax is a scale wax. Scale wax is a generic term for a partially-refined slack wax. In one embodiment, the scale wax will have a free oil content of at least 0.5 wt% or 1 wt%. In another embodiment, the free oil content will be at least 2 wt%. The free oil content of the scale wax is preferably about 5 wt% or less, and in one type of embodiment will be 3 wt% or less. The scale wax preferably has a melt point in a range of about 120 °F to about 140 °F (about 49 °C to about 60 °C). Scale wax generally can have a color in a range from white to yellow.

In another embodiment the partially-refined petroleum wax is a semi-refined paraffin wax. Semi-refined waxes can be hydrotreated or clay filtered slack waxes or scale waxes. In one embodiment, the semi-refined wax will have a free oil content of at least 0.5 wt% or 1 wt%. In another embodiment, the free oil content will be at least 2 wt%. The free oil content of the semi-refined wax is preferably about 5 wt% or less, and in one type of embodiment will be 3 wt% or less. The semi-refined wax preferably has a melt point in a range of about 120 °F to about 140 °F (about 49 °C to about 60 °C). Semi-refined waxes are generally white in color.

Slack wax, when used alone, produces an inferior candle. For example, slack wax alone bums with a tremendous amount of soot. Tallow, when used alone, produces an inferior candle. For example, fully-refined tallow and stearic acid are difficult to consume completely due to their hardness, and they often leave a hard, brittle shell upon burning. In the ratios and types described herein, a combination of animal tallow and a partially-refined petroleum wax blend to produce a desirable candle. Balancing of soft and low melting waxes with hard, high melting waxes can result in a candle which is compressible and free-standing, and optionally can have favorable thermal stability and burn characteristics. For example, combining a soft slack wax with a moderately hard tallow produces a candle that folds neatly into the burn pool during burning, resulting in nearly a complete consumption of the candle. In preferred embodiments, the candle may have one or more properties including lower soot, high fragrance, a creamy appearance, improved thermal stability, higher level of consumption, and economic advantage over both fully refined paraffin and _ vegetable candles in the current marketplace.

The candle can be made by a method including mixing the tallow, partially-refined petroleum wax, and any optional ingredients according to the combinations and amounts described herein, by creating particles from a molten mixture of the ingredients (*e.g.,* by spray granulation), and then by pressing the particles to form a solid candle body. Suitable granulation and compression methods are known in the art. A wick can be provided in any manner, and suitable methods are known in the art. For example, a wick can be disposed in an uncompressed-wax particle region and compressed together with the wax, As another example, a cavity can be formed in a compressed wax region during or subsequent to compression, and a wick can later be fed into the cavity in a separate wicking operation.

The candle composition and method are contemplated to include embodiments consisting of or consisting essentially of tallow and a partially-refined petroleum wax component, or also including any combination of one or more of the additional optional elements, features, and steps further described below, unless stated otherwise.

An additional fuel can be used in the composition, for example at an additive level (e.g., 0 % to about 20 wt%) to aid in burn or processing performance.

A preferred optional component is microcrystalline wax. The microcrystalline wax can function both as a structural binder (e,g., through tackiness) and as a binder for free oils. The microcrystalline wax can have a melting point in a range of about 50 °C to about 95°C, preferably 75°C to 85°C, more preferably about 71°C to about 77°C. The microcrystalline wax preferably has an oil content of 5 wt% or below, for example 2.5 wt%. The microcrystalline wax preferably has a penetration value (at 25°C, needle, 0.1mm, ASTM D 1321) of greater than 20, preferably greater than 30, for example in a range of 40 to 50. The microcrystalline wax preferably has a kinematic viscosity (at 100 °C, ASTM D 445) in a range of 15 mm² to 20 mm². A suitable microcrystalline wax is available from ExxonMobil under the trade name WAXREX 3920. The microcrystalline wax is preferably present in an amount of at least 5 wt% and up to 30 wt%, for example in a range of about 10 wt% to about 20 wt% or 15 wt% to 25 wt%.

Another preferred ingredient is an oil-binding additive. Oil binding additives (a.k.a. crystal modifiers) are known in the art and include such additives as stearic acid, and polyethylene polymers such as A-C 400 and VYBAR (e.g., VYBAR 103). The oil binding additive can be used to reduce or eliminate contact bleed of oil onto a substrate, and it can also provide the candle with a smooth, shiny appearance. The oil binding additive is preferably used in an amount in a range of 0.1 wt% to about 40 wt%. For example stearic acid can be used in an amounts of at least 0.1 wt%, preferably at least 2 wt%, and about 40 wt% or less, preferably about 30 wt% or less. A range of 0.1 wt% to 10 wt% is also contemplated. A suitable stearic acid is available under the trade name EMERY 422 from Cognis Corp.

A fatty component, for example fatty alcohols, fatty esters, fatty acids, and mixtures thereof, can optionally be included in the candle. Use of one or more C₁₂ to C₂₂ fatty alcohols is contemplated. For example, a fatty alcohol can be present in an amount up to about 10 wt%, or in a range of about 1 wt% to about 10 wt%.

A fatty component can be used to aid in cohesion between the solid and liquid phases of the candle. Particularly when a fully hydrogenated tallow is used, use of a fatty compound aids in allowing use of a higher oil content wax, e.g., at least 3 wt%, at least 5 wt%, at least 10 wt%, or more. A fatty compound can also be used to aid in consumption of the candle, for example by creating a larger burn pool around the wick.

A fully refined paraffin can also optionally be included in the candle. It is contemplated that the fully-refined paraffin can have a free oil content of about 2 wt% or less. It is also contemplated to use a fully-refined paraffin having a free oil content of less than 2 wt%, for example 1 wt% and 0.5 wt%. In one type of embodiment, the fully-refined paraffin can have a melt point of at least 120 °F. The fully refined paraffin can also have a melt point of about 145 °F or less. The fully-refined paraffin will preferably be used in an amount of 50 wt% or less, and contemplated ranges include 10 wt% to 50 wt°l°, 10 wt% to 40 wt%, 20 wt% to 50 wt%, and 40 wt% to 50 wt%.

The candle can also include one or more other candle additives known in the art or developed for use in candles. For example, the candle can include one or more ingredients to provide the resulting article with decorative and/or functional properties. Examples include any number of solid or liquid additives known for use in candle making, including substituted fatty acids, alcohols, acid esters, stability additives, UV inhibitors, antioxidants, and combinations thereof. Such ingredients can be provided alone, e.g., in particulate form and mixed with the wax particles, or as part of the wax particles themselves. Suitable decorative ingredients include, but are not limited to, pigments, dyes, and non-wax particulates (e.g., glitter). For example, a colorant can be included in an amount up to 2 wt% in one type of embodiment. Suitable functional and active ingredients include, but are not limited to, fragrances, deodorants, insect repellents, animal attractants, sanitizing agents, or any other such compounds suitable for release from the article into the surrounding environment. For example, a functional and/or active ingredient can be included in an amount up to 15 wt% in one type of embodiment.

Table 1 below shows broad and narrow preferred ranges of ingredients for one type of free-standing, compressed candle according to the disclosure, as well as one specific formulation. All components are specified by percent weight based on the total weight of the candle mass (without wick).

**Table 1**

| Component or property | Broad | Narrow | Specific |
|---|---|---|---|
| Tallow* | 10-80 | 20-, 25-, 30-, or 50-80 | 80 |
| Iodine Value of tallow | 10-30 | 18-22 | 20 |
| Slack Wax | 1-30 | 5-20 | 5 |
| oil content of slack wax | 0.5%-40% | 1%-15% | 3% |
| Microcrystalline Wax | 0-30 | 15-20 | 15 |
| *the tallow component is optionally contemplated to include a fraction of tallow IV 1, *e.g.,* 10% of the 80% tallow specified above. | | | |

### EXAMPLES

The following examples are provided for illustration and are not intended to limit the scope of the invention.

### Comparative Example 1

A first set of compressed pillar candles was made from a mixture of 60% fully refined paraffin, 20 wt% CALUMET 300SW, and 20 wt% fully-hydrogenated tallow having an iodine value of 1. CALUMET 300SW is a slack wax acquired from Calumet Lubricants, Inc. containing typically 30% oil.

### Example 1

A second set of compressed pillar candles was made from a mixture of 50% fully refined paraffin, 20 wt% CALUMET 300SW, and 30 wt% tallow having an iodine value of 1. CALUMET 300SW is a slack wax acquired from Calumet Lubricants, Inc. containing typically 30% oil.

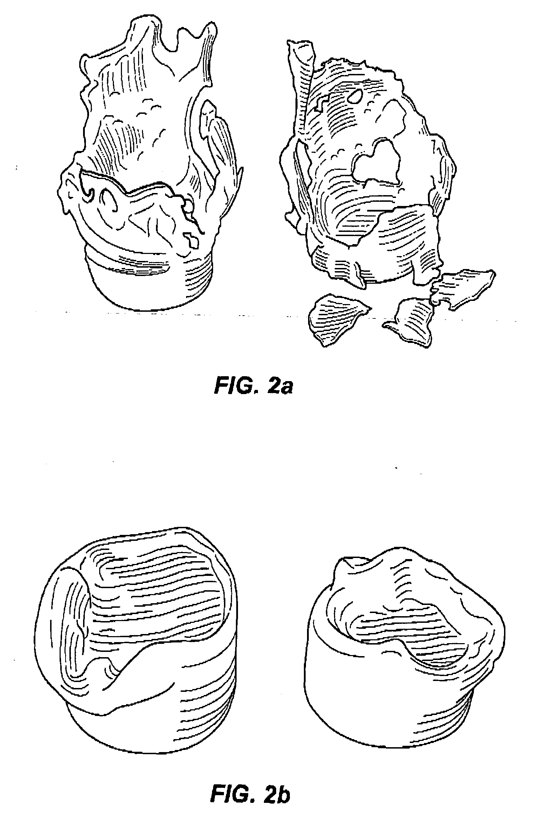

The candles of Example 2 and Comparative Example 2 were placed on a paper substrate and subjected to a 120 °F (49 °C) atmosphere for two hours. Shown in Figure 2a is an illustration of the contact bleed oil deposit left by the candle of Comparative Example 2 on the paper substrate. Shown in Figure 2b at the same relative scale is an illustration of the significantly and surprisingly smaller contact bleed oil deposit left by the candle of Example 2 on the paper substrate. Candle blends prepared with 20 wt% CALUMET 300SW and 80 wt% fully refined paraffin with tallow having an iodine value of 1 lacked sufficient structural integrity at room temperature to allow for thermal testing.

### Examples 2-15 and Comparative Example 2

Compressed Candles were made according to the ratios of components provided in Table 2 below, all components being specified in wt% based on the candle mass without wick. Acceptability of the formulations in various respects is indicated next to each example.

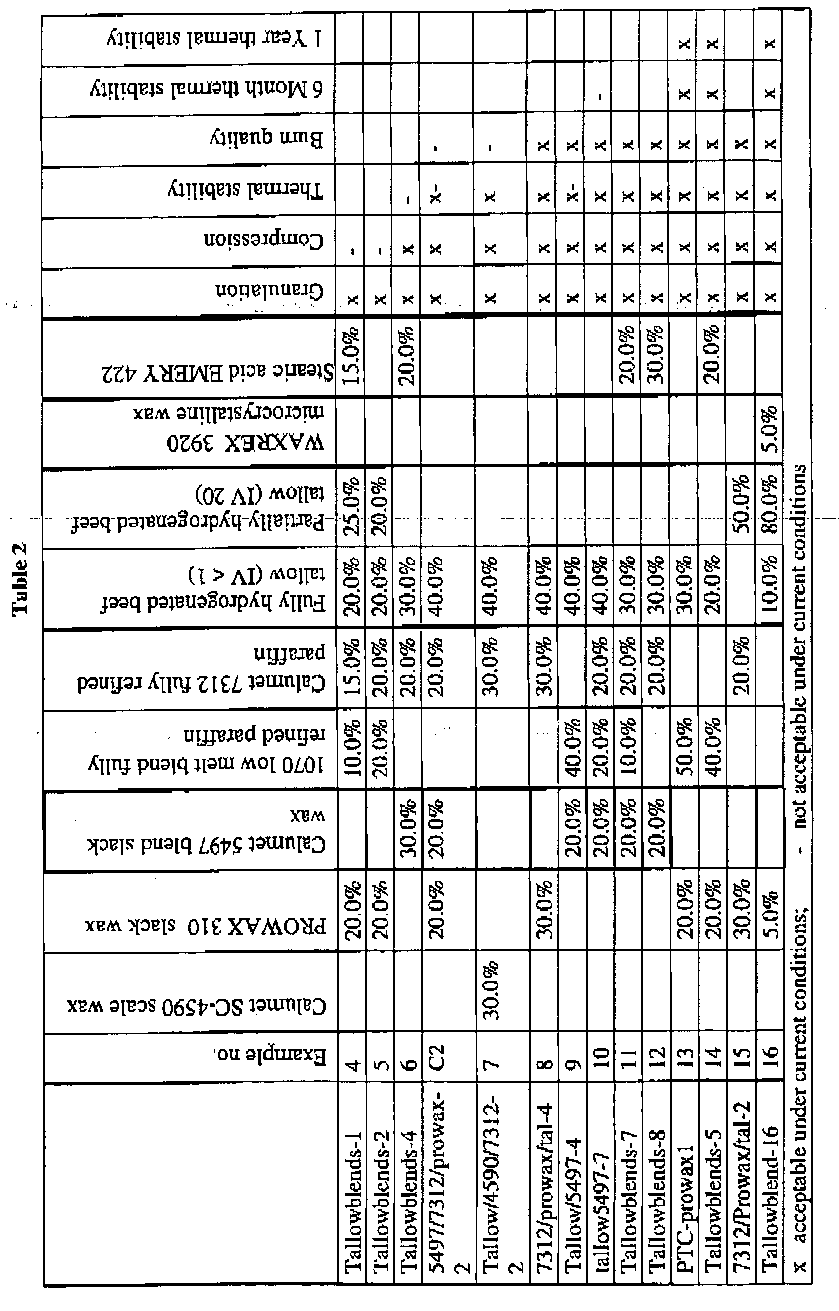

The components in Table 2 above are reported to have the properties shown in Table 3 below.

**Table 3**

| COMPONENT | Oil Content max (typical) | Viscosity | Melt Point | Penetration @ 77° F |
|---|---|---|---|---|
| Calumet SC-4590 scale wax | 3% (2%) | 36.8 SUS (at 210 °F, about 99 °C) | 116.0 °F (about 47 °C) | 35 |
| PROWAX 310 petroleum slack wax | 2.5% | 3.2 cSt (at 100°C) | 50°C to 53.3°C | typical 100 (needle, 0.1mm) |
| Calumet 5497 blend slack wax | (15%) | | 135°F (57.2°C) | 105 |
| 1070 low melt blend fully refined paraffin | 0.5% (0.4%) | | 133°F (55.9°C) | 17 |
| Calumet 7312 fully refined paraffin | 0.5% (0.1%) | 55.0 SUS at 210°F | 165 °F (74°C) | 13 |
| Fully hydrogenated beef tallow (IV < 1)* | | | +140 °F (60 °C) | |
| Partially hydrogenated beef tallow (IV 20)* | | | 135 °F (57°C) | |
| WAXREX 3920 microcrystalline wax | 5% (2.5%) | 15 cSt min, 20 cSt max (at 100 °C) | 75°C to 85°C | typical 45 (needle, 0.1mm) |
| Stearic acid EMERY 422** | | | | |
| *maximum 1 % free fatty acid | | | | |
| ** typical composition 2.2% myristic acid, 37.2% palmitic acid, 1.9% margaric acid, 56% stearic acid | | | | |

The granulation and compression of the candles will now be described. The wax was pumped to a KURSCHNER wax spray drum system and held at 140 °F to 170 °F (63 °C to 77 °C), depending on the mix of ingredients. The spray drum temperature was maintained at 55 °F (13 °C). The drum rotated at 45 yards/min (41 meters/min). The spray room was maintained at approximately 65 °F (18 °C).

The wax was pumped through a spray manifold system and onto the rotating drum. Spray nozzles on the manifold are designed such that the resulting particle size ranges from 0.05 mm to 2.0 mm. A scraper on the opposite side of the drum removed the wax granules, depositing them on a vibrating conveyor system. The conveyor system transferred the granules inside the drum, where the granules tumble for further cooling. After traveling through the drum, the granulated wax was transferred to a hopper for storage and later use,

The hopper then moved over the top of cylinder molds, allowing the granulated wax to fill via gravity transfer. The hopper moved back to receive additional wax while top and bottom pistons subjected the granulated wax in the cylinders to a compressive force of 2000 lb/in² to 3000 lb/in² (13 MPa to 21MPa) by moving toward each other. The resulting article was then pushed up to the top of the cylinder and transferred away from the press for further processing. Each compressed candle was cylindrical with a diameter of 2.8 inches (7.1 cm).

The thermal stability test is characterized by the following procedure: (a) place candle in an ambient of 120 °F (49 °C); (b) after two hours, remove candle and place in an ambient of 72 °F (22 °C); (c) after two hours, place candle in an ambient of 0°F(-18 °C); (d) after two hours, place candle in an ambient of 72°F (22°C); (e) repeat steps (a) through (d); (f) record observations after two cycles. Any surface defects such as visible oil bleed, cracking, melting, pitting, loss of color or finish, or candle deformation would constitute a failure. If the candles are tested after periods of storage, such as six months or one year, they are stored and tested in an unwrapped condition.

The burn test has two components: first, the flame height must be 3 inches or less, (according to ASTM Provisional Standard PS 59-02); second, at least 80% of the candle must be consumed in a complete burn.

The candles of Examples 4 and 5 included a relatively high amount of hard, high melting, fully-refined paraffin and could be improved by using a relatively softer slack wax, and with relatively more oil-absorbing components such as tallow, microcrystalline wax, or stearic acid (compare, *e.g.*, Examples 8, 10 and 11). The candles of Example 6 also included a relatively high level of high-oil slack wax, and while the stearic acid did aid in providing a wax that was acceptable for granulation and compression, it had poor thermal stability by the test method described above, so no further testing was performed. The candles of Example 6 could have been improved by including more oil-absorbing tallow (see, *e.g.*, Examples 7 and 15). The candles of Comparative Example 2 included a very high level of slack wax; some candles failed thermal stability testing and burn quality was poor (low level of consumption).

### Comparative Example 3 and Comparative Testing With Example 16

A set of compressed pillar candles was made from a blend of 55 % tallow having an iodine value of 1, 20 % stearic acid, and 25 % tallow having an iodine value of 50.

The candles of Example 16 and Comparative Example 3 were burned using a standard protocol with optimized wicks. The candles of Comparative Example 3 are illustrated in Figure 2a, and the candles of Example 16 are illustrated in Figure 2b after burning. The candles of Comparative Example 3 formed a significant hard, brittle polymorph shell during burning, and the shell did not fold into the burn pool. The candles of Example 16 formed a flexible shell that was easily massaged towards the burn pool.

The foregoing description is given for clearness of understanding only, and no unnecessary limitations should be understood therefrom, as modifications within the scope of the invention may be apparent to those having ordinary skill in the art.

Throughout the specification, where compositions are described as including components or materials, it is contemplated that the compositions can also consist essentially of, or consist of, any combination of the recited components or materials, unless described otherwise.

The practice of a method disclosed herein, and individual steps thereof, can be performed manually and/or with the aid of electronic equipment. Although processes have been described with reference to particular embodiments, a person of ordinary skill in the art will readily appreciate that other ways of performing the acts associated with the methods may be used. For example, the order of various of the steps may be changed without departing from the scope or spirit of the method, unless described otherwise. In addition, some of the individual steps can be combined, omitted, or further subdivided into additional steps.

## Claims

1. A candle, comprising:
a free-standing, compressed body of wax comprising
at least 10 wt% tallow; and
1 wt% to 30 wt% of a partially-refined petroleum wax comprising at least 0.5 wt% oil;
and a wick disposed in the body of wax.

2. The candle of claim 1, wherein the tallow is present in an amount greater than 25 wt%.

3. The candle of claim 2, wherein the tallow is present in an amount of at least 30 wt%.

4. The candle of claim 3, wherein the tallow is present in an amount of at least 50 wt%.

5. The candle of claim 1, wherein the partially-refined petroleum wax comprises at least 1 wt% oil.

6. The candle of claim 5, wherein the partially-refined petroleum wax comprises up to 40 wt% oil.

7. The candle of claim 6, wherein the partially-refined petroleum wax comprises up to 15 wt% oil.

8. The candle of claim 1, wherein the tallow comprises up to 30 wt% fully refined tallow.

9. The candle of claim 8, wherein the tallow comprises up to 20 wt% fully-refined tallow.

10. The candle of claim 1, wherein the tallow comprises partially-refined tallow having an iodine value in a range of about 10 to about 30.

11. The candle of claim 10, wherein the partially-refined tallow has an iodine value in a range of about 15 to about 25.

12. The candle of claim 11, wherein the partially-refined tallow has an iodine value in a range of about 18 to about 22.

13. The candle of claim 10, wherein the tallow further comprises up to 30 wt% fully refined tallow.

14. The candle of claim 14, wherein the fully refined tallow is present in an amount up to 20 wt%.

15. The candle of claim 1, further comprising a microcrystalline wax.

16. The candle of claim 15, wherein the microcrystalline wax is present in an amount up to 30 wt%.

17. The candle of claim 16, wherein the microcrystalline wax is present in a range of 10 wt% to 20 wt%.

18. The candle of claim 1, further comprising an oil binding additive.

19. The candle of claim 18, wherein the oil binding additive is present in an amount in a range of 0.1 wt% to 40 wt%.

20. The candle of claim 18, wherein the oil-binding additive is stearic acid.

21. The candle of claim 20, wherein the stearic acid is present in an amount in a range of 2 wt% to 40 wt%.

22. The candle of claim 21, wherein the stearic acid is present in an amount up to 30 wt%.
